# EUROPÄISCHE PATENTANMELDUNG

(11) **EP 3 644 239 A1**
(43) Veröffentlichungstag der Anmeldung: **29.04.2020**
(21) Anmeldenummer: 19203770.3
(22) Anmeldetag: 17.10.2019
(51) Int. Cl.: G06N 3/04, G06F 21/16, G06N 3/08, G06N 5/02, G08G 1/00, G05D 1/00

(54) **VERFAHREN UND VORRICHTUNG ZUM ABSTRAHIEREN EINES DATENSATZES**

(30) Priorität: 23.10.2018 DE 102018218098
(71) Anmelder: Volkswagen AG, 38440 Wolfsburg (DE)
(72) Erfinder: Schlicht, Peter, 38442 Wolfsburg (DE); Hüger, Fabian, 38302 Wolfenbüttel (DE)

(57) **Zusammenfassung**

Die Erfindung betrifft ein Verfahren zum Abstrahieren eines Datensatzes (2), wobei der Datensatz (2) zum Maschinenlernen mindestens einer Funktion vorgesehenen ist, umfassend die folgenden Schritte: Anlernen einer verschiedene neuronale Netze (5) umfassenden komplexen neuronalen Netzstruktur (4) auf die mindestens eine Funktion hin im Wege des Maschinenlernens auf Grundlage des Datensatzes (2) mittels einer Maschinenlern-Steuereinrichtung (3), wobei die neuronalen Netze (5) und die komplexe neuronale Netzstruktur (4) hinsichtlich einer maximalen Repräsentativität des Datensatzes (2) optimiert werden, Bereitstellen der angelernten komplexen neuronalen Netzstruktur (4) in Form eines datensatzspezifischen Wissensmoduls (6), sodass ein im Datensatz (2) enthaltenes Wissen auf datenschutzkonforme Weise weitergenutzt werden kann. Ferner betrifft die Erfindung eine zugehörige Vorrichtung (1).

## Beschreibung

Die Erfindung betrifft ein Verfahren und eine Vorrichtung zum Abstrahieren eines Datensatzes.

Durch die Verbesserungen in den Bereichen künstlicher Intelligenz und maschinelles Lernen ist es in den letzten Jahren möglich geworden, komplexe Funktionen, beispielsweise Wahrnehmungsfunktionen, anhand von umfangreichen Datensätzen zu trainieren. Auch im Bereich der Fahrzeugtechnik kommen vermehrt Funktionen zum Einsatz, die mit Hilfe maschinellen Lernens erzeugt werden. Hierbei kommen insbesondere Verfahren des tiefen Lernens (engl. Deep Learning) zum Einsatz. Zum Trainieren der zur Umsetzung dieser Funktionen notwendigen tiefen neuronalen Netze sind große Datensätze an Trainingsdaten notwendig. Solche Trainingsdaten können beispielsweise Sprach-, Text- oder Bild- und Videodaten sowie weitere Fahrzeugsensordaten (aus einem Innenraum oder einer Umgebung des Fahrzeugs, von Apps erfasste Daten oder Nutzereingaben auf Webseiten etc.) sein. Diese Daten fallen unter datenschutzrechtliche Bestimmungen (vgl. Datenschutz-Grundverordnung, DSGVO). Dies hat zur Folge, dass die Trainingsdaten im Sinne des Datenschutzes nach Ablauf des Zwecks der Datenaufnahme gelöscht werden müssen.

Es ist es jedoch erstrebenswert, das in den großen Datensätzen der Trainingsdaten gesammelte Wissen für eine weitergehende Entwicklung von Funktionen zu erhalten.

Bekannt ist es, dieses in den Trainingsdaten vorhandene Wissen nutzbar zu machen bzw. zu erhalten, indem die Trainingsdaten durch Entfernen aller personenbezogenen Details anonymisiert werden oder die Trainingsdaten über Heuristiken oder Statistiken beschrieben werden.

Der Erfindung liegt die Aufgabe zu Grunde, ein Verfahren und eine Vorrichtung zum Abstrahieren eines Datensatzes zu schaffen, bei denen das in dem Datensatz vorhandene Wissen gespeichert und in datenschutzkonformer Weise wieder bereitgestellt werden kann, auch nachdem der originäre Datensatz gelöscht worden ist.

Die Aufgabe wird erfindungsgemäß durch ein Verfahren mit den Merkmalen des Patentanspruchs 1 und eine Vorrichtung mit den Merkmalen des Patentanspruchs 10 gelöst. Vorteilhafte Ausgestaltungen der Erfindung ergeben sich aus den Unteransprüchen.

Insbesondere wird ein Verfahren zum Abstrahieren eines Datensatzes zur Verfügung gestellt, wobei der Datensatz zum Maschinenlernen mindestens einer Funktion vorgesehenen ist, umfassend die folgenden Schritte: Anlernen einer verschiedene, insbesondere tiefe, neuronale Netze umfassenden komplexen neuronalen Netzstruktur auf die mindestens eine Funktion hin im Wege des Maschinenlernens auf Grundlage des Datensatzes mittels einer Maschinenlern-Steuereinrichtung, wobei die, insbesondere tiefen, neuronalen Netze und die komplexe neuronale Netzstruktur hinsichtlich einer maximalen Repräsentativität des Datensatzes optimiert werden, Bereitstellen der angelernten komplexen neuronalen Netzstruktur in Form eines datensatzspezifischen Wissensmoduls, sodass ein im Datensatz enthaltenes Wissen auf datenschutzkonforme Weise weitergenutzt werden kann.

Ferner wird eine Vorrichtung zum Abstrahieren eines Datensatzes geschaffen, wobei der Datensatz zum Maschinenlernen mindestens einer Funktion vorgesehenen ist, umfassend eine Maschinenlern-Steuereinrichtung, wobei die Maschinenlern-Steuereinrichtung derart ausgebildet ist, eine verschiedene, insbesondere tiefe, neuronale Netze umfassende komplexe neuronale Netzstruktur auf die mindestens eine Funktion hin im Wege des Maschinenlernens auf Grundlage des Datensatzes anzulernen, wobei die, insbesondere tiefen, neuronalen Netze und die komplexe neuronale Netzstruktur hinsichtlich einer maximalen Repräsentativität des Datensatzes optimiert werden, und die angelernte komplexe neuronale Netzstruktur in Form eines datensatzspezifischen Wissensmoduls bereitzustellen, sodass ein im Datensatz enthaltenes Wissen auf datenschutzkonforme Weise weitergenutzt werden kann.

Es ist eine Grundidee der Erfindung, das in dem zum Trainieren verwendeten Datensatz enthaltene Wissen durch eine komplexe neuronale Netzstruktur zu erhalten, welche auf den Datensatz angelernt wurde, wobei von der komplexen neuronalen Netzstruktur umfasste, insbesondere tiefe, neuronale Netze und die komplexe neuronale Netzstruktur auf maximale Repräsentativität des Datensatzes optimiert werden, sodass das im ursprünglichen Datensatz enthaltene konzeptionelle Wissen auch nach Löschen des ursprünglichen Datensatzes umfassend erhalten bleibt, ohne aber ein Wiederherstellen der Daten zu ermöglichen, welches datenschutzrechtlich problematisch wäre. Anders ausgedrückt dient die komplexe neuronale Netzstruktur nach dem Anlernen als Speicher für das in dem Datensatz vorhandene Wissen. Die komplexe neuronale Netzstruktur wird auf mindestens eine Funktion angelernt, wobei dies auf Grundlage des Datensatzes erfolgt. Nach dem Anlernen wird die angelernte komplexe neuronale Netzstruktur in Form eines datensatzspezifischen Wissensmoduls bereitgestellt. Dieses Wissensmodul wird beispielsweise als entsprechender Datensatz und/oder Programmcode in digitaler Form bereitgestellt.

Der Vorteil der Erfindung liegt darin, dass die in Form des Wissensmoduls bereitgestellte komplexe neuronale Netzstruktur das in dem ursprünglich verwendeten Datensatz vorhandene Wissen weiterhin enthält, jedoch in abstrakter Form ohne jegliche personenbezogenen Daten. Das Wissensmodul enthält daher das im Datensatz vorhandene Wissen in datenschutzkonformer Weise. Der ursprüngliche Datensatz der Trainingsdaten kann daher gelöscht werden, ohne das darin enthaltene Wissen zu verlieren. Eine Weiterverwendung des Wissensmoduls ist daher datenschutzrechtlich unbedenklich.

Ein weiterer Vorteil der Erfindung liegt darin, dass das Wissensmodul im Vergleich zu dem ursprünglichen Datensatz deutlich weniger Daten umfasst und daher weniger Speicherplatz benötigt. Es kann also trotz der Möglichkeit, das in dem Datensatz vorhandene Wissen weiterhin nutzbar zu machen, Speicherplatz eingespart werden.

Der Datensatz umfasst insbesondere Trainingsdaten, d.h. Daten, die mit zusätzlichen Markierungen versehen sind (engl. labeled data), welche dazu dienen, ein neuronales Netz anzulernen. Eine solche Markierung ist beispielsweise die Information, dass auf im Datensatz bereitgestellten Bildern jeweils eine bestimmte Klasse von Objekten (z.B. ein Fahrrad) abgebildet ist. Die Daten können weiter über kontextuelle Informationen beschrieben werden (engl. Tagging). Solche Informationen beschreiben weniger den Inhalt der Daten im Sinne einer Grundwahrheit (engl. ground truth), also als Zielgröße für ein Maschinenlernprozess, sondern sind eine Metabeschreibung zur Einordnung der Daten in einen Kontext. Beispiele hierfür sind Geokoordinaten, eine Uhrzeit, ein aktuelles Fahrmanöver etc.

Repräsentativität soll in diesem Zusammenhang insbesondere bedeuten, dass das in der komplexen neuronalen Netzstruktur nach dem Anlernen hinterlegte Wissen repräsentativ für den beim Anlernen verwendeten Datensatz ist, d.h. dass das hinterlegte Wissen diesen Datensatz möglichst repräsentativ nachbilden kann, wenn man den Datensatz als Grundgesamtheit betrachtet.

Insbesondere kann vorgesehen sein, dass die komplexe neuronale Netzstruktur für eine Vielzahl von Funktionen angelernt wird (multi-task-learning). Auf diese Weise lässt sich eine maximal potente komplexe neuronale Netzstruktur erzeugen. Hierdurch lassen sich auch hochkomplexe Aufgaben mit einer Vielzahl von notwendigen Funktionen mittels der komplexen neuronalen Netzstruktur lösen bzw. das in einem zugehörigen Datensatz vorhandene Wissen auf datenschutzkonforme Weise nutzbar machen.

Es kann vorgesehen sein, dass während des Anlernens alle von der komplexen neuronalen Netzstruktur umfassten neuronalen Netze angelernt bzw. die einzelnen Gewichtungen in den neuronalen Netzen verändert werden. Es kann jedoch auch vorgesehen sein, dass einzelne neuronale Netze nicht angelernt bzw. verändert werden, sondern dass das Anlernen nur einen Teil der neuronalen Netze betrifft und/oder nur auf einer nachgeordneten Ebene innerhalb der komplexen neuronalen Netzstruktur erfolgt. Es kann ferner vorgesehen sein, dass für bestimmte Funktionen öffentlich erhältliche neuronale Netze bzw. entsprechende Softwarepakete verwendet werden.

In einer Ausführungsform ist vorgesehen, dass in dem Wissensmodul zusätzlich eine formalisierte Beschreibung des durch die angelernte komplexe neuronale Netzstruktur repräsentierten Datensatzes bereitgestellt wird. Die formalisierte Beschreibung umfasst insbesondere eine automatisch erstellte und maschinenlesbare Beschreibung der Inhalte der ursprünglichen Trainingsdaten in dem Datensatz, beispielsweise eine Verteilung von Szenarien und Kontextvariablen, das heißt in den Daten vorhandene Objekte, Wetter, Lichtverhältnisse, Fahrzeugeigenschaften etc. Insbesondere kann die formalisierte Beschreibung Informationen zu einer Verkehrsinfrastruktur, zu Fahrbedingungen (z.B. eine Umgebungslichtintensität, eine Niederschlagsintensität, eine Umgebungstemperatur, eine Fahrbahnglätte) zu dynamischen Objekten (z.B. zu erkannten Fahrzeugen oder Fußgängern) und/oder zur Funktionsweise von Fahrerassistenzsystemen und/oder zum Auftreten eines vordefinierten Fahrszenarios umfassen.

In einer Ausführungsform ist vorgesehen, dass in dem Wissensmodul zusätzlich mindestens eine Statistik über den durch die angelernte komplexe neuronale Netzstruktur repräsentierten Datensatz bereitgestellt wird. Dies können beispielsweise Angaben zu einer Menge und/oder einer Verteilung der Daten und/oder Angaben zu einer Sensorkonfiguration und/oder einer Sensorposition und/oder Angaben zu einer Menge der Aufgaben sein. Die Menge der Aufgaben kann hierbei insbesondere die folgenden Aufgaben umfassen: eine semantische Segmentierung, eine 2D-Objektklassifikation und -lokalisierung, eine 3D-Objektklassifikation und -lokalisierung, eine Objektprädiktion, eine Freiraumerkennung, eine Kritikalitätsbewertung, eine Wetterklassifikation, eine Reibwertprädiktion, eine Landmarkenerkennung, eine Trajektorienvorhersage des eigenen oder eines anderen Fahrzeuges, eine Fahrspurerkennung und/oder eine Tiefenschätzung.

In einer weiteren Ausführungsform ist vorgesehen, dass in dem Wissensmodul zusätzlich mindestens ein Metaparameter über die angelernte komplexe neuronale Netzstruktur bereitgestellt wird. Ein solcher Metaparameter beschreibt beispielsweise eine Art und/oder eine Struktur der einzelnen neuronalen Netze in der komplexen neuronalen Netzstruktur bzw. in dem Wissensmodul und/oder eine Art und/oder eine Struktur der komplexen neuronalen Netze.

In einer Ausführungsform ist vorgesehen, dass in dem Wissensmodul zusätzlich mindestens eine die angelernte komplexe neuronale Netzstruktur und/oder den durch die angelernte komplexe neuronale Netzstruktur repräsentierten Datensatz charakterisierende Qualitätskennzahl bereitgestellt wird. Eine solche Qualitätskennzahl kann beispielsweise eine Qualität des Wissensmoduls im Hinblick auf alle darin umgesetzten Funktionen sein, beispielsweise eine Erfolgsquote des Wissensmoduls. Eine Qualitätskennzahl kann auch eine Qualität einer einzelnen der mindestens einen Funktionen sein, beispielsweise eine Erfolgsquote bei einer Objekterkennung. Eine Qualitätskennzahl kann sich auch auf nichtfunktionale Eigenschaften beziehen, wie beispielsweise eine Abdeckungsgüte des Datensatzes oder eine Robustheit mindestens einer auf dem Datensatz trainierten Funktion.

Es kann auch vorgesehen sein, dass das Wissensmodul einen Teil oder alle der vorgenannten Angaben (formalisierte Beschreibung, Metaparameter, Qualitätskennzahl etc.) bereitstellt.

In einer Ausführungsform ist vorgesehen, dass die komplexe Netzstruktur zumindest teilweise durch Stacking und/oder Ensembling zumindest eines Teils der neuronalen Netze ausgebildet ist. Einfach ausgedrückt werden beim Stacking parallel mehrere unterschiedliche neuronale Netze zur Lösung der gleichen Aufgabe verwendet. In einer diesen mehreren neuronalen Netzen nachgeordneten Ebene ermittelt dann ein weiteres neuronales Netz, in welchen Fällen welches der mehreren neuronalen Netze die beste Entscheidung trifft. Beim Ensembling werden die Ergebnisse von mehreren neuronalen Netzen miteinander kombiniert im Ensemble betrachtet. Der Vorteil der Verwendung der Stacking- und Ensemble-Verfahren ist, dass bei der Umsetzung der Funktionen, beispielsweise bei einer Objekterkennung, höhere Erfolgsquoten erreicht werden können gegenüber der Verwendung einzelner neuronaler Netze.

In einer weiteren Ausführungsform ist vorgesehen, dass auf Grundlage des bereitgestellten datensatzspezifischen Wissensmoduls eine Bewertung mindestens einer weiteren Funktion und/oder eine Analyse von Unterschieden des Datensatzes zu einem anderen Datensatz durchgeführt werden. Verschiedene Wissensmodule ergeben für verschiedene Datensätze spezifische Wissensabstraktionen. Die Wissensmodule bzw. die darin enthaltenen Wissensabstraktionen können beispielsweise zur Bewertung neuer Funktionen hinsichtlich einer Stabilität und/oder einer Divergenz auf gleichen Aufgaben verwendet werden. Ferner kann eine Analyse der Unterschiede zwischen einzelnen Datensätzen durchgeführt werden, indem die zugehörigen Wissensmodule miteinander verglichen werden.

In einer Ausführungsform ist vorgesehen, dass mindestens ein weiteres neuronales Netz auf Grundlage des bereitgestellten Wissensmoduls initialisiert und/oder angelernt wird. Das bereitgestellte Wissensmodul ermöglicht es, das in dem ursprünglichen Datensatz vorhandene Wissen in abstrakter datenschutzkonformer Weise bereitzustellen und für das Trainieren des weiteren neuronalen Netzes oder auch einer weiteren komplexen neuronalen Netzstruktur nutzbar zu machen. Das Wissensmodul kann einer Initialisierung des weiteren neuronalen Netzes oder zum Trainieren in Form eines Student-Teacher-Verfahrens verwendet werden. Beim Student-Teacher-Verfahren werden zum Trainieren des weiteren neuronalen Netzes nicht markierte Trainingsdaten (engl. labeled data), sondern die Ergebnisse des Wissensmoduls verwendet. Anders ausgedrückt werden der komplexen neuronalen Netzstruktur des Wissensmoduls und dem zu trainierenden weiteren neuronalen Netz die gleichen Eingangsdaten zugeführt, wobei das zu trainierende weitere neuronale Netz anhand der Ausgangsdaten der komplexen neuronalen Netzstruktur des Wissensmoduls trainiert wird. Da das im ursprünglichen Datensatz vorhandene Wissen immer noch im Wissensmodul vorhanden ist, wird das weitere neuronale Netz näherungsweise so trainiert, wie es mit dem ursprünglichen Datensatz möglich gewesen wäre.

In einer weiterbildenden Ausführungsform ist insbesondere vorgesehen, dass das mindestens eine weitere neuronale Netz im Vergleich zu der komplexen neuronalen Netzstruktur weniger komplex ausgebildet ist.

In einer Ausführungsform ist vorgesehen, dass die komplexe neuronale Netzstruktur auf das Ausführen aller für ein automatisiertes Fahren eines Kraftfahrzeugs notwendigen Wahrnehmungsfunktionen auf Grundlage von entsprechenden als Datensatz bereitgestellten Sensordaten angelernt wird. Dies bedeutet insbesondere, dass die zu trainierenden Wahrnehmungsfunktionen die Sensordaten (z.B. Kameradaten, d.h. Bild- und/oder Videodaten, und/oder Radardaten und/oder Lidar-Daten) als Eingangsdaten erhalten und am Ausgang Daten liefern, die von allen Wahrnehmungsfunktionen stammen. Diese Wahrnehmungsfunktionen betreffen insbesondere:
- eine semantische Segmentierung,
- eine Objekterkennung (z.B. Auto, Straßenschild, Fußgänger, Ampel etc.) mit 2D-Bounding box,
- eine Objekterkennung und Objektlokalisation (z.B. Auto, Straßenschild, Fußgänger, Ampel etc.) mit 3D-Bounding box,
- eine Freiraumerkennung (Segmentierung von befahrbaren Bereichen oder Regionen im Umfeld),
- eine Fahrspurerkennung,
- eine Intentionserkennung (z.B. eine Pose und eine Intention von Verkehrsteilnehmern),
- eine Vorhersage eines Verhaltens des eigenen Fahrzeugs und eines Verhaltens anderer Verkehrsteilnehmer.

Die in dieser Ausführungsform anschließend als Wissensmodul bereitgestellte komplexe neuronale Netzstruktur ist maximal potent und umfasst das gesamte Wissen aus dem Datensatz.

Der Vorteil dieser Ausführungsform ist, dass neu entwickelte Wahrnehmungsfunktionen auch ohne den ursprünglichen Datensatz getestet, analysiert und angelernt werden können.

Es kann jedoch auch vorgesehen sein, dass nur einzelne Wahrnehmungsfunktionen oder nur ein Teil aller notwendigen Wahrnehmungsfunktionen in der komplexen neuronalen Netzstruktur bzw. dem Wissensmodul umgesetzt werden.

Teile der Vorrichtung, insbesondere die Maschinenlern-Steuereinrichtung, können einzeln oder zusammengefasst als eine Kombination von Hardware und Software ausgebildet sein, beispielsweise als Programmcode, der auf einem Mikrocontroller oder Mikroprozessor ausgeführt wird. Ferner ist ebenfalls möglich, dass die Maschinenlern-Steuereinrichtung ganz oder teilweise als Field Programmable Gate Array (FPGA) oder als Application-Specific Integrated Circuit (ASIC) ausgebildet ist.

Nachfolgend wird die Erfindung anhand bevorzugter Ausführungsbeispiele unter Bezugnahme auf die Figuren näher erläutert. Hierbei zeigen:
- Fig. 1: eine schematische Darstellung einer Ausführungsform der Vorrichtung zum Abstrahieren eines Datensatzes;
- Fig. 2: ein schematisches Ablaufdiagramm einer Ausführungsform des Verfahrens zum Abstrahieren eines Datensatzes.

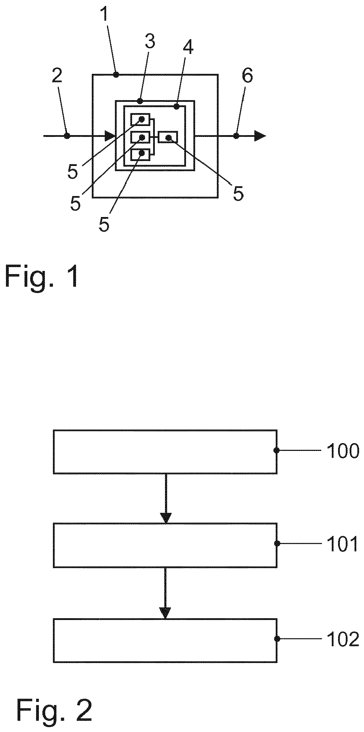

In Fig. 1 ist eine schematische Darstellung einer Ausführungsform der Vorrichtung 1 zum Abstrahieren eines Datensatzes 2 gezeigt. Die Vorrichtung 1 umfasst eine Maschinenlern-Steuereinrichtung 3.

Der Vorrichtung 1 wird der Datensatz 2 bereitgestellt. Der Datensatz 2 kann beispielsweise Bilddaten und/oder Videodaten und/oder Sensordaten umfassen, wobei die von dem Datensatz umfassten Daten markiert sind (engl. labeled data), d.h. die Daten in dem Datensatz sind mit zusätzlichen Informationen markiert, die angeben, was in den Daten enthalten ist. Die Daten können weiter über kontextuelle Informationen beschrieben werden (engl. Tagging). Solche Informationen beschreiben weniger den Inhalt der Daten im Sinne einer Grundwahrheit (engl. ground truth), also als Zielgröße für ein Maschinenlernprozess, sondern sind eine Metabeschreibung zur Einordnung der Daten in einen Kontext. Beispiele hierfür sind Geokoordinaten, eine Uhrzeit, ein aktuelles Fahrmanöver etc. Der Datensatz 2 wird der Maschinenlern-Steuereinrichtung 3 zugeführt.

Die Maschinenlern-Steuereinrichtung 3 lernt eine komplexe neuronale Netzstruktur 4 auf mindestens eine Funktion hin im Wege des Maschinenlernens auf Grundlage des Datensatzes 2 an. Die komplexe neuronale Netzstruktur 4 umfasst verschiedene neuronale Netze 5. Beim Anlernen werden die neuronalen Netze 5 und die komplexe neuronale Netzstruktur 4 hinsichtlich einer maximalen Repräsentativität des Datensatzes 2 optimiert. Dieser Schritt ermöglicht es, das in dem Datensatz 2 vorhandene Wissen nach dem Ende des Anlernens mittels der komplexen neuronalen Netzstruktur 4 repräsentativ wiederzugegeben. Jegliche personenbezogenen Daten, die in dem Datensatz 2 enthalten waren, sind in der angelernten komplexen neuronalen Netzstruktur 4 hingegen nicht mehr vorhanden, so dass das Wissen in datenschutzkonformer Weise erhalten bleibt.

Die Maschinenlern-Steuereinrichtung 3 stellt die angelernte komplexe neuronale Netzstruktur 4 anschließend in Form eines datensatzspezifischen Wissensmoduls 6 bereit. Dieses Wissensmodul 6 wird insbesondere in Form eines Datenpakets bereitgestellt, in dem Informationen zur Struktur und den Parametern bzw. Gewichtungen der komplexen neuronalen Netzstruktur 4 sowie der neuronalen Netze 5 enthalten sind.

Das bereitgestellte Wissensmodul 6 kann anschließend dazu verwendet werden, das in dem ursprünglichen Datensatz 2 vorhandene Wissen auf datenschutzkonforme Weise nutzbar zu machen, beispielsweise um ein weiteres neuronales Netz anzulernen oder zu testen.

In einer Ausführungsform ist vorgesehen, dass die komplexe neuronale Netzstruktur 4 auf das Ausführen aller für ein automatisiertes Fahren eines Kraftfahrzeugs notwendigen Wahrnehmungsfunktionen auf Grundlage von entsprechenden als Datensatz 2 bereitgestellten Sensordaten angelernt wird. Dies bedeutet insbesondere, dass die zu trainierenden Wahrnehmungsfunktionen die Sensordaten (z.B. Kameradaten, d.h. Bild- und/oder Videodaten, und/oder Radardaten und/oder Lidar-Daten) als Eingangsdaten erhalten und am Ausgang Daten liefern, die von allen Wahrnehmungsfunktionen stammen. Diese Wahrnehmungsfunktionen betreffen insbesondere:
- eine semantische Segmentierung,
- eine Objekterkennung (z.B. Auto, Straßenschild, Fußgänger, Ampel etc.) mit 2D-Bounding box,
- eine Objekterkennung und Objektlokalisation (z.B. Auto, Straßenschild, Fußgänger, Ampel etc.) mit 3D-Bounding box,
- eine Freiraumerkennung (Segmentierung von befahrbaren Bereichen oder Regionen im Umfeld),
- eine Fahrspurerkennung,
- eine Intentionserkennung (z.B. eine Pose und eine Intention von Verkehrsteilnehmern)
- eine Vorhersage eines Verhaltens des eigenen Fahrzeugs und eines Verhaltens anderer Verkehrsteilnehmer.

Die in dieser Ausführungsform anschließend als Wissensmodul 6 bereitgestellte komplexe neuronale Netzstruktur 4 ist maximal potent und umfasst das gesamte Wissen aus dem Datensatz 2.

Es kann jedoch auch vorgesehen sein, dass nur einzelne Wahrnehmungsfunktionen oder nur ein Teil aller für das automatisierte Fahren notwendigen Wahrnehmungsfunktionen in der komplexen neuronalen Netzstruktur 4 umgesetzt werden.

In Fig. 2 ist ein schematisches Ablaufdiagramm einer Ausführungsform des Verfahrens zum Abstrahieren eines Datensatzes gezeigt.

Im Verfahrensschritt 100 wird ein zum Maschinenlernen mindestens einer Funktion vorgesehener Datensatz bereitgestellt und von einer Maschinenlern-Steuereinrichtung empfangen.

Im Verfahrensschritt 101 wird eine komplexe neuronale Netzstruktur auf die mindestens eine Funktion hin im Wege des Maschinenlernens auf Grundlage des empfangenen Datensatzes mittels der Maschinenlern-Steuereinrichtung angelernt, wobei die neuronalen Netze und die komplexe neuronale Netzstruktur hinsichtlich einer maximalen Repräsentativität des Datensatzes optimiert werden. Die komplexe neuronale Netzstruktur umfasst verschiedene neuronale Netze, und ist beispielsweise mittels Stacking und/oder Ensembling ausgebildet.

Im Verfahrensschritt 102 wird die angelernte komplexe neuronale Netzstruktur in Form eines datensatzspezifischen Wissensmoduls bereitgestellt. In dem Wissensmodul ist die komplexe neuronale Netzstruktur, beispielsweise als entsprechende Strukturdaten und/oder Parameter- bzw. Gewichtungsdaten hinterlegt.

Das Wissensmodul wird beispielsweise in Form eines Datenpakets bereitgestellt, sodass es auf einfache Weise weiterverarbeitet werden kann. Durch das Bereitstellen des Wissensmoduls kann das im Datensatz enthaltene Wissen auf datenschutzkonforme Weise weitergenutzt werden.

Es kann ferner vorgesehen sein, dass in dem Wissensmodul zusätzlich eine formalisierte Beschreibung des durch die angelernte komplexe neuronale Netzstruktur repräsentierten Datensatzes bereitgestellt wird.

Ebenfalls kann vorgesehen sein, dass in dem Wissensmodul zusätzlich mindestens eine Statistik über den durch die angelernte komplexe neuronale Netzstruktur repräsentierten Datensatz bereitgestellt wird.

Es kann weiter vorgesehen sein, dass in dem Wissensmodul zusätzlich mindestens ein Metaparameter über die angelernte komplexe neuronale Netzstruktur bereitgestellt wird.

Ferner kann vorgesehen sein, dass in dem Wissensmodul zusätzlich mindestens eine die angelernte komplexe neuronale Netzstruktur und/oder den durch die angelernte komplexe neuronale Netzstruktur repräsentierten Datensatz charakterisierende Qualitätskennzahl bereitgestellt wird.

Es kann vorgesehen sein, dass die komplexe neuronale Netzstruktur zumindest teilweise durch Stacking und/oder Ensembling zumindest eines Teils der neuronalen Netze ausgebildet ist.

Weiter kann vorgesehen sein, dass auf Grundlage des bereitgestellten datensatzspezifischen Wissensmoduls eine Bewertung mindestens einer weiteren Funktion und/oder eine Analyse von Unterschieden des Datensatzes zu einem anderen Datensatz durchgeführt werden.

Es kann vorgesehen sein, dass mindestens ein weiteres neuronales Netz auf Grundlage des bereitgestellten Wissensmoduls initialisiert und/oder trainiert wird. Dies kann beispielsweise mittels des Student-Teacher-Verfahrens erfolgen.

In einer Weiterbildung kann vorgesehen sein, dass das mindestens eine weitere neuronale Netz im Vergleich zu der komplexen neuronalen Netzstruktur weniger komplex ausgebildet ist.

### Bezugszeichenliste

- 1: Vorrichtung
- 2: Datensatz
- 3: Maschinenlern-Steuereinrichtung
- 4: komplexe neuronale Netzstruktur
- 5: neuronales Netz
- 6: Wissensmodul
- 100-102: Verfahrensschritte

## Patentansprüche

1. Verfahren zum Abstrahieren eines Datensatzes (2), wobei der Datensatz (2) zum Maschinenlernen mindestens einer Funktion vorgesehenen ist, umfassend die folgenden Schritte:
Anlernen einer verschiedene neuronale Netze (5) umfassenden komplexen neuronalen Netzstruktur (4) auf die mindestens eine Funktion hin im Wege des Maschinenlernens auf Grundlage des Datensatzes (2) mittels einer Maschinenlern-Steuereinrichtung (3), wobei die neuronalen Netze (5) und die komplexe neuronale Netzstruktur (4) hinsichtlich einer maximalen Repräsentativität des Datensatzes (2) optimiert werden,
Bereitstellen der angelernten komplexen neuronalen Netzstruktur (4) in Form eines datensatzspezifischen Wissensmoduls (6), sodass ein im Datensatz (2) enthaltenes Wissen auf datenschutzkonforme Weise weitergenutzt werden kann.

2. Verfahren nach Anspruch 1, **dadurch gekennzeichnet, dass** in dem Wissensmodul (6) zusätzlich eine formalisierte Beschreibung des durch die angelernte komplexe neuronale Netzstruktur repräsentierten Datensatzes (2) bereitgestellt wird.

3. Verfahren nach Anspruch 1 oder 2, **dadurch gekennzeichnet, dass** in dem Wissensmodul (5) zusätzlich mindestens eine Statistik über den durch die angelernte komplexe neuronale Netzstruktur (4) repräsentierten Datensatz (2) bereitgestellt wird.

4. Verfahren nach einem der vorangegangenen Ansprüche, **dadurch gekennzeichnet, dass** in dem Wissensmodul (6) zusätzlich mindestens ein Metaparameter über die angelernte komplexe neuronale Netzstruktur (5) bereitgestellt wird.

5. Verfahren nach einem der vorangegangenen Ansprüche, **dadurch gekennzeichnet, dass** in dem Wissensmodul (5) zusätzlich mindestens eine die angelernte komplexe neuronale Netzstruktur (4) und/oder den durch die angelernte komplexe neuronale Netzstruktur (4) repräsentierten Datensatz (2) charakterisierende Qualitätskennzahl bereitgestellt wird.

6. Verfahren nach einem der vorgegangenen Ansprüche, **dadurch gekennzeichnet, dass** die komplexe neuronale Netzstruktur (4) zumindest teilweise durch Stacking und/oder Ensembling zumindest eines Teils der neuronalen Netze (5) ausgebildet ist.

7. Verfahren nach einem der vorangegangenen Ansprüche, **dadurch gekennzeichnet, dass** auf Grundlage des bereitgestellten datensatzspezifischen Wissensmoduls (6) eine Bewertung mindestens einer weiteren Funktion und/oder eine Analyse von Unterschieden des Datensatzes (2) zu einem anderen Datensatz durchgeführt werden.

8. Verfahren nach einem der vorangegangenen Ansprüche, **dadurch gekennzeichnet, dass** mindestens ein weiteres neuronales Netz auf Grundlage des bereitgestellten Wissensmoduls (6) initialisiert und/oder angelernt wird.

9. Verfahren nach einem der vorangegangenen Ansprüche, **dadurch gekennzeichnet, dass** die komplexe neuronale Netzstruktur (4) auf das Ausführen aller für ein automatisiertes Fahren eines Kraftfahrzeugs notwendigen Wahrnehmungsfunktionen auf Grundlage von entsprechenden als Datensatz (2) bereitgestellten Sensordaten angelernt wird.

10. Vorrichtung (1) zum Abstrahieren eines Datensatzes (2), wobei der Datensatz (2) zum Maschinenlernen mindestens einer Funktion vorgesehenen ist, umfassend:
eine Maschinenlern-Steuereinrichtung (3), wobei die Maschinenlern-Steuereinrichtung (3) derart ausgebildet ist, eine verschiedene neuronale Netze (5) umfassende komplexe neuronale Netzstruktur (4) auf die mindestens eine Funktion hin im Wege des Maschinenlernens auf Grundlage des Datensatzes (2) anzulernen, wobei die neuronalen Netze (5) und die komplexe neuronale Netzstruktur (4) hinsichtlich einer maximalen Repräsentativität des Datensatzes (2) optimiert werden, und
die angelernte komplexe neuronale Netzstruktur (4) in Form eines datensatzspezifischen Wissensmoduls (6) bereitzustellen, sodass ein im Datensatz (2) enthaltenes Wissen auf datenschutzkonforme Weise weitergenutzt werden kann.
